Europäisches Patentamt

European Patent Office

Office européen des brevets

(11) Veröffentlichungsnummer: **0 123 826**
**A1**

## (12) EUROPÄISCHE PATENTANMELDUNG

(21) Anmeldenummer: **84102191.8**

(51) Int. Cl.³: **G 11 B 5/22**

(22) Anmeldetag: **01.03.84**

(30) Priorität: **04.03.83 DE 3307776**

(43) Veröffentlichungstag der Anmeldung: **07.11.84**
**Patentblatt 84/45**

(84) Benannte Vertragsstaaten: **DE FR GB**

(71) Anmelder: **Siemens Aktiengesellschaft, Berlin und München Wittelsbacherplatz 2, D-8000 München 2 (DE)**

(72) Erfinder: **Waldkircher, Ferdinand, Dipl.-Ing., Muldenstrasse 2, D-8031 Wörthsee (DE)**

(54) Aufzeichnungsanordnung für einen Magnetschichtspeicher.

(57) Die Aufzeichnungsanordnung enthält einen mit einer verschleißarmen Schicht versehenen Magnetkopf (1) und ein Speichermedium, das eine Magnetschicht aufweist und relativ zum Magnetkopf bewegt wird. Auf dem Magnetkopf (1) und/oder auf der Magnetschicht wird nach dem an sich bekannten DC-Magnetron-Sputterverfahren eine dünne Schicht (8) aus einem Metallkarbid oder einem Metallnitrid aufgebracht. Die Aufzeichnungsanordnung kann für Magnetbandgeräte oder Magnetplattenspeicher, einschließlich Floppydiskspeichern vorgesehen sein. Bei Verwendung des DC-Magnetron-Sputterverfahrens ist sichergestellt, daß durch das Aufbringen der Schicht die magnetischen Eigenschaften nicht verändert werden. Zur Erzeugung des Spalts in jedem Magnetsystem des Magnetkopfs (1) kann auf die Polflächen (12) ebenfalls eine Schicht aus dem Metallkarbid oder Metallnitrid aufgebracht werden.

SIEMENS AKTIENGESELLSCHAFT
Berlin und München

Unser Zeichen
VPA 83 P 1127 E

## Aufzeichnungsanordnung für einen Magnetschichtspeicher

Die Erfindung bezieht sich auf eine Aufzeichnungsanordnung für einen Magnetschichtspeicher entsprechend dem Oberbegriff des Patentanspruchs 1.

Es ist bereits allgemein bekannt, Signale unter Verwendung von Magnetschichtspeichern zu speichern. Diese Signale können Analogsignale oder binäre Signale sein. Magnetschichtspeicher für die Speicherung von binären Signalen sind in erster Linie Magnetbandspeicher, Magnetplattenspeicher, Magnetkartenspeicher und Floppydiskspeicher. Die eigentliche Speicherung erfolgt unter Verwendung einer Aufzeichnungsanordnung, die aus einem Magnetkopf und einem mit einer Magnetschicht versehenen Speichermedium gebildet wird. Bei Magnetbandspeichern, Magnetkartenspeichern und Floppydiskspeichern ist der Magnetkopf während des Speichervorgangs ständig mit der Magnetschicht in Berührung. Hierdurch unterliegt sowohl der Magnetkopf als auch die Magnetschicht einem Verschleiß. Bei den Magnetplattenspeichern hingegen "fliegt" der Magnetkopf in einem vorgegebenen Abstand über der Magnetplatte. Im Störungsfall kann es jedoch vorkommen, daß ein Magnetkopf auf der Magnetplatte "landet", was zu einem erheblichen Verschleiß oder gar zur Zerstörung des Magnetkopfs und/oder der Magnetplatte führen kann.

Zur Verminderung des Verschleißes wurden bereits mehrere Vorschläge gemacht. Beispielsweise ist aus der DE-PS 23 44 561 bekannt, den Magnetkopf mit einem mit Hilfe eines Plasmasprühverfahrens aufgebrachten Überzug aus nichtmagnetischem, keramischem Material zu versehen. Die

Ret 1 Fra / 28.2.1983

Keramikschicht weist zunächst eine verhältnismäßig große Dicke auf und sie wird wieder soweit abgeschliffen, daß der Polspalt und das magnetische Material der Polstücke in schmalen an den Luftspalt angrenzenden Zonen wieder freiliegt. Die Keramiküberzüge bleiben dabei in ausreichender Dicke in vorbereiteten Vertiefungen außerhalb der schmalen Zonen stehen.

Aus einer Veröffentlichung von Brainard W.A., Wheeler D.R.: Thin Solid Films, 63 (1979), Seiten 363 bis 368 ist es bekannt, als verschleißarmes Material Metallkarbide, beispielsweise Titankarbid zu verwenden, die mittels des an sich bekannten RF-Sputterverfahrens aufgebracht werden. Eine Beschichtung von magnetischen Werkstoffen, wie sie in einer Aufzeichnungsanordnung verwendet werden, ist nach dem RF-Sputterverfahren nicht möglich, da in diesem Fall die Substrate eine verhältnismäßig hohe Temperatur erreichen, die die magnetischen Eigenschaften verändern würden. In einer Veröffentlichung Mayer N.M.: Resistance Measurements by Radio Telemetric System during Film Deposition by Sputtering: Siemens Forschungs- und Entwicklungsberichte Band 11 (1982), Nr. 6, Seiten 322 bis 326 ist ein Sputterverfahren bekannt, das als DC-Magnetron-Sputterverfahren bezeichnet wird und das dort für eine Herstellung von Widerständen auf Schichtschaltungen unter Verwendung von Tantal dient. Dort ist gezeigt, daß der Temperaturanstieg während dieses Sputterverfahrens lediglich 4,2° C pro 1000 W während 360 s beträgt. Im Gegensatz hierzu ist der Temperaturanstieg bei dem RF-Sputterverfahren um etwa den Faktor 5,5 größer, d.h. 21,8° C pro 1000 W während 360 s. Die wesentlich höhere Temperatur beim RF-Sputterverfahren ist eine Folge von Sekundärelektronen, die nicht im magnetischen Feld des Magnetrons abgelenkt werden.

Der vorliegenden Erfindung liegt die Aufgabe zugrunde, eine Aufzeichnungsanordnung für einen Magnetschichtspeicher anzugeben, bei der ein besonders geringer Verschleiß auftritt und die dennoch kostengünstig herstellbar ist.

Erfindungsgemäß wird die Aufgabe bei der Aufzeichnungsanordnung der eingangs genannten Art durch die im kennzeichnenden Teil des Patentanspruchs 1 angegebenen Merkmale gelöst.

Die Aufzeichnungsanordnung gemäß der Erfindung hat den Vorteil, daß sie eine besonders hohe Verschleißfestigkeit aufweist, daß die aufgebrachten Schichten eine besonders gute Gleitfähigkeit aufweisen und daß sie besonders glatt sind. Die Aufzeichnungsanordnung ist mit geringen Herstellkosten herstellbar und kann ohne weitere Bearbeitung auf das Fertigprodukt aufgebracht werden. Trotz des Aufbringens der zusätzlichen Schicht werden die magnetischen Eigenschaften nicht verändert, da einerseits das aufgebrachte Material nichtmagnetisch ist und andererseits die magnetischen Werkstoffe nur geringfügig erwärmt werden.

Es erweist sich insbesondere als zweckmäßig, als Metallkarbide entweder Titankarbid oder eines von mehreren möglichen Chromkarbiden zu verwenden. Auch erweist sich die Verwendung von Titannitrid als vorteilhaft.

Für die Aufzeichnungsanordnung erweist es sich insbesondere als günstig, den Magnetkopf nur teilweise mit der Schicht zu versehen und diese insbesondere nur an gegebenenfalls vorhandenen Berührungsflächen mit der Magnetschicht anzuordnen. Als Magnetschicht, die mit der Schicht versehen ist, ist vorzugsweise eine Magnetplatte vorgesehen.

Eine auf mindestens eine Polfläche jedes Magnetsystems aufgebrachte Schicht aus dem Metallkarbid oder dem Me-

0123826

tallnitrid kann auch zur Bildung des Spalts des Magnetsystems verwendet werden. Hierdurch wird es möglich, Spaltbreiten von weniger als 1 µm auf einfache Weise zu erzeugen.

Ausführungsbeispiele einer Aufzeichnungsanordnung gemäß der Erfindung werden im folgenden anhand von Zeichnungen näher erläutert. Es zeigen

Fig. 1 einen mit einer verschleißarmen Schicht versehenen Magnetkopf,

Fig. 2 eine Darstellung von Kernen eines Magnetsystems im Magnetkopf,

Fig. 3 einen mit einer verschleißarmen Schicht auf der Magnetschicht versehenen Magnetplattenstapel.

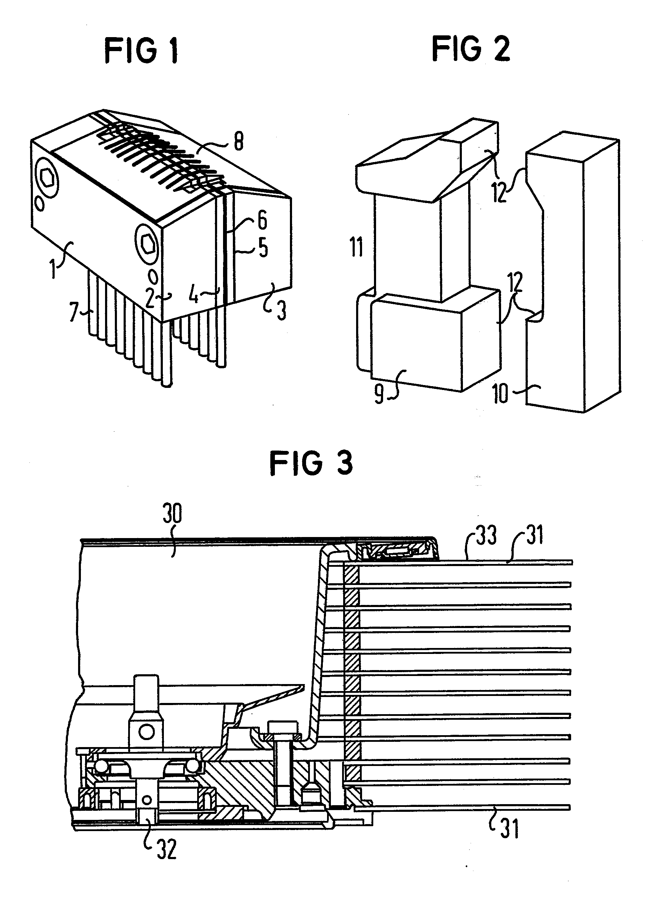

Der in Fig. 1 dargestellte Magnetkopf 1 ist für eine Aufzeichnung von Daten auf ein Magnetband vorgesehen. Der Magnetkopf 1 enthält für eine Aufzeichnung der Daten in neun parallelen Spuren auf dem Magnetband neun Schreibsysteme und zum Lesen der Daten neun Lesesysteme. Sowohl die Schreibsysteme als auch die Lesesysteme werden jeweils aus einem C-Kernblock 2 bzw. 3 als auch aus einem I-Kernblock 4 bzw. 5 gebildet. Zwischen den C-Kernblöcken und den I-Kernblöcken befindet sich jeweils ein Schreibspalt bzw. ein Lesespalt. Zwischen den beiden I-Kernen 4 und 5 ist eine Abschirmung 6 vorgesehen, die ein Übersprechen von den Schreibsystemen auf die Lesesysteme verhindert. Die Schreibsysteme und die Lesesysteme sind durch abgeschirmte Leitungen 7 mit entsprechenden Schreib- bzw. Leseverstärkern verbunden.

Der Magnetkopf 1 berührt im Bereich der Schreib- und der Lesesysteme, wie bereits erwähnt, das Magnetband. Um einen Verschleiß des Magnetkopfs 1 zu vermindern, wird zumindest dieser Bereich mit einer dünnen Schicht 8, die dünner ist als 0,2 µm, aus einem verschleißarmen Material versehen. Diese Schicht 8 ist vorzugsweise ein Metallkarbid, insbesondere Titankarbid TiC oder ein Chromkarbid $Cr_XC_Y$ oder ein Metallnitrid, insbesondere Titannitrid TiN.

Diese Schicht wird unter Verwendung des allgemein bekannten DC-Magnetron- Sputterverfahren durch reaktives Zerstäuben aufgebracht. Dieses Verfahren hat den Vorteil, daß die maximale Substrattemperatur beispielsweise bei 2 kW nur ca. 37° C nach einer Sputterzeit von 6 min beträgt. Durch die verhältnismäßig niedrige Temperatur wird sichergestellt, daß die magnetischen Eigenschaften der Materialien der Schreib- und Lesesysteme nicht verändert werden. Da die aufgebrachte Schicht 8 sehr dünn ist, ist eine Nachbearbeitung des Magnetkopfs 1 nicht mehr erforderlich, so daß ein derartiger verschleißarmer Magnetkopf 1 mit geringen Herstellkosten herstellbar ist. Durch die Verwendung der Schicht 8 mit einer Mikrohärte bis zu 5000 kp/$cm^2$ ist der Magnetkopf 1 besonders verschleißarm und es sind günstige Gleitpaarungen realisierbar. Die Schichten sind, insbesondere aus Titankarbid gegen sich selbst beständig und gleitfähig und erreichen nie höhere Reibwerte als 0,2. Durch das DC-Magnetron-Sputterverfahren können mehrere Magnetköpfe 1 gleichzeitig im fertig geprüften und eingelaufenen Zustand mit der Schicht 8 versehen werden.

In entsprechender Weise wie der in Fig. 1 dargestellte Magnetkopf 1 können andere Magnetköpfe, wie sie beispielsweise bei Magnetschichtspeichern mit flexiblen Magnetscheiben oder Magnetplatten verwendet werden mit einer entsprechenden Schicht versehen werden. Bei den Magnetschichtspeichern mit flexiblen Magnetscheiben berührt der Magnetkopf ebenfalls die Magnetschicht, so daß auch hier während des normalen Betriebs ein Verschleiß auftritt. Bei Magnetplattenspeichern hingegen "fliegt" der Magnetkopf in einem vorgegebenen Abstand über der Magnetplatte. Im Störungsfall kann es jedoch zu einer "Landung" des Magnetkopfs auf der Magnetplatte kommen, wobei der Magnetkopf und/oder die Magnetplatte beschädigt werden. Um diese Beschädigung auf ein Minimum zu reduzieren, kann daher auch der Magnetkopf eines Magnetplattenspeichers mit einer entsprechenden Schicht aus den Metallkarbiden oder Metallnitriden versehen sein. Auf diese Weise werden günstige Notlaufeigenschaften bei der Berührung zwischen dem Magnetkopf und der Magnetplatte erreicht.

Bei der Darstellung in Fig. 2 sind ein einzelner C-Kern 9 und ein einzelner I-Kern 10 dargestellt. Der C-Kern 9 weist einen Wickelraum 11 auf, auf dem die Schreib- oder die Lesewicklung aufgebracht ist. Zwischen dem C-Kern 9 und dem I-Kern 10 ist ein Spalt vorgesehen, der auf der Oberseite des Magnetkopfs 1 den Schreib- bzw. den Lesespalt darstellt. Dieser Spalt ist häufig mit einem Glimmer-, Metall- oder Kunststoffblättchen ausgefüllt. Unter Verwendung des bereits genannten DC-Magnetron-Sputterverfahrens ist es auch möglich, auf die Polflächen 12 ebenfalls ein Metallkarbid oder ein Metallnitrid aufzutragen und die Spalte auf diese Weise zu erzeugen. Auf diese Weise ist es möglich, Spalte zu erzeugen, die schmaler als beispielsweise 1 µm sind. Während bei den Glimmer- oder Kunststoffblättchen die Gefahr besteht, daß beim Betrieb des Magnetkopfs 1 an dieser Stelle Auswaschungen auftreten, d.h. Vertiefungen des entsprechenden Materials im Spalt wird dies durch das Auftragen der genannten Schicht aus dem Metallkarbid oder Metallnitrid verhindert, so daß auch hier eine Verschleißfestigkeit erreicht wird. Zudem sind auf diese Weise besonders schmale Kopfspalte erreichbar. Auch hier brauchen nicht die gesamten Polflächen 12 mit der Schicht versehen sein. Es genügt

0123826

beispielsweise, nur die am oberen Kopfspalt vorgesehenen
Polflächen 12 oder auch nur diese teilweise mit der
Schicht zu versehen.

Außer den Magnetköpfen können auch die zugehörigen Magnetschichten der Speichermedien mit einer entsprechenden
verschleißarmen Schicht aus dem genannten Metallkarbid
oder dem Metallnitrid versehen sein.

Bei dem in Fig. 3 dargestellten handelsüblichen Plattenstapel 30 sind 12 Magnetplatten 31 angeordnet. Die Magnetplatten 31 können auf beiden Seiten mit Magnetschichten
versehen sein, die mit jeweils einer dünnen Schicht 32
aus dem Metallkarbid oder dem Metallnitrid überzogen
sind. Die Magnetplatten 31 drehen sich mit einer verhältnismäßig großen Drehzahl um eine Achse 32. Das Speichern
und das Lesen von Daten erfolgt unter Verwendung der Magnetköpfe, die in einem vorgegebenen Abstand über den Magnetschichten "fliegen". Falls im Störungsfall ein derartiger Magnetkopf mit der Magnetschicht der Magnetplatte
31 in Berührung kommt, wird die Beschädigung sowohl des
Magnetkopfs als auch der entsprechenden Magnetplatte 31
auf ein Minimum reduziert, wenn der Magnetkopf und/oder
die Magnetplatte 31 mit der genannten verschleißarmen
Schicht 33 versehen ist.

Die genannten Metallkarbide oder das Metallnitrid eignen
sich insbesondere für besonders günstige Gleitpaarungen
und die Schichten erweisen sich als besonders gleitfähig
und erreichen, wie bereits erwähnt, niemals größere Reibwerte als 0,2. Es sei an dieser Stelle hervorgehoben, daß
unter Verwendung der genannten Metallkarbide und des Metallnitrids sich auch viele andere Trockenreibprobleme in
Tribosystemen lösen lassen. Die Schichten 33 werden auch
auf die mit den Magnetschichten versehenen Speichermedien
unter Verwendung des DC-Magnetron-Sputterverfahrens aufgebracht.

Erst durch dieses Verfahren wurde es ermöglicht, diese Schichten 33 auf die Magnetschichten aufzubringen, da die verhältnismäßig niedrigen Temperaturen es erst ermöglichen, die Magnetplatten ohne Gefahr der Zerstörung mit diesen Schichten 33 zu versehen. Da die Schichten 33 dünner als 0,2 µm sind, werden die mechanischen und die magnetischen Eigenschaften der Speichermedien nicht verändert und dennoch wird eine große Lebensdauer erreicht.

9 Patentansprüche
3 Figuren

Patentansprüche

1. Aufzeichnungsanordnung für einen Magnetschichtspeicher, bei dem unter Verwendung eines mit einer verschleißarmen Schicht versehenen Magnetkopfs mit mindestens einem Magnetsystem auf einer Magnetschicht eines relativ zum Magnetkopf bewegten Speichermediums Signale, insbesondere Binärsignale aufgezeichnet werden, d a d u r c h  g e - k e n n z e i c h n e t ,  daß der Magnetkopf (1) und/ oder die Magnetschicht (33) mit einer nach dem an sich bekannten DC-Magnetron-Sputterverfahren aufgebrachten dünnen Schicht aus einem Metallkarbid oder einem Metallnitrid versehen ist.

2. Aufzeichnungsanordnung nach Anspruch 1, d a d u r c h  g e k e n n z e i c h n e t ,  daß als Metallkarbid Titankarbid oder ein Chromkarbid vorgesehen ist.

3. Aufzeichnungsanordnung nach Anspruch 1, d a d u r c h  g e k e n n z e i c h n e t ,  daß als Metallnitrid Titannitrid vorgesehen ist.

4. Aufzeichnungsanordnung nach einem der Ansprüche 1 bis 3, d a d u r c h  g e k e n n z e i c h n e t ,  daß der Magnetkopf (1) nur in dem Bereich, der die Magnetschicht gegebenenfalls berührt, mit der Schicht versehen ist.

5. Aufzeichnung nach Anspruch 4, d a d u r c h  g e - k e n n z e i c h n e t ,  daß die Schicht dünner als 0,2 µm ist.

6. Aufzeichnungsanordnung nach einem der Ansprüche 1 bis 5, d a d u r c h  g e k e n n z e i c h n e t ,  daß als Magnetkopf (1) ein mit einer Mehrzahl von Schreibund Lesesystemen vorgesehener Magnetkopf für Magnetbandspeicher vorgesehen ist.

7. Aufzeichnungsanordnung nach einem der Ansprüche 1 bis 5, d a d u r c h   g e k e n n z e i c h n e t ,   daß als Magnetkopf ein Magnetkopf in einem Magnetplattenspeicher vorgesehen ist.

8. Aufzeichnungsanordnung nach einem der Ansprüche 1 bis 7, d a d u r c h   g e k e n n z e i c h n e t ,   daß als mit der Schicht versehenes Speichermedium eine Magnetplatte (31) vorgesehen ist.

9. Aufzeichnungsanordnung nach einem der Ansprüche 1 bis 7, d a d u r c h   g e k e n n z e i c h n e t ,   daß der Spalt jedes Magnetsystems des Magnetkopfs (1) eine Schicht aus dem Metallkarbid oder dem Metallnitrid enthält.

1/1

FIG 1

FIG 2

FIG 3

**Europäisches Patentamt**

**EUROPÄISCHER RECHERCHENBERICHT**

0 123826

Nummer der Anmeldung

EP 84 10 2191

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | Patent Abstracts of Japan Band 7, Nr. 32, 8. Februar 1983 <br> --- | 1 | G 11 B 5/22 |
| A | & JP-A-57-183623 <br> --- | 2,3 | |
| D,Y | SIEMENS FORSCHUNGS- UND ENTWICKLUNGSBERICHTE; Band 11, Nr. 6, 1982 N.M. MAYER "Resistance measurements by radio telemetric system during film deposition by sputtering", Seiten 322-326 <br> * Seite 323, Spalte 2, Zeile 22 - Seite 324, Spalte 1, Zeile 15 * <br> --- | 1 | |
| A | Patent Abstracts of Japan Band 7, Nr. 26, 2. Februar 1983 & JP-A-57-179950 <br> --- | 1 | RECHERCHIERTE SACHGEBIETE (Int. Cl. ³) |
| A | Patent Abstracts of Japan Band 7, Nr. 10, 14 Januar 1983 & JP-A-57-167133 <br> --- | 1,3 | G 11 B 5/00 |
| A | US-A-3 663 767 (K. SHIMOTORI et al.) <br> * Spalte 1, Zeilen 1-53 * <br> --- | | |
| P,A | DE-A-2 321 286 (MATSUSHITA) <br> ---     -/- | | |

Der vorliegende Recherchenbericht wurde für alle Patentansprüche erstellt.

| Recherchenort <br> BERLIN | Abschlußdatum der Recherche <br> 15-05-1984 | Prüfer <br> ROGNONI M.G.L. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 242 743 (SIEMENS) ----- | | |

RECHERCHIERTE SACHGEBIETE (Int. Cl. 3)

Der vorliegende Recherchenbericht wurde für alle Patentansprüche erstellt.

| Recherchenort BERLIN | Abschlußdatum der Recherche 15-05-1984 | Prüfer ROGNONI M.G.L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82